# EUROPÄISCHE PATENTANMELDUNG

(11) **EP 4 530 428 A1**
(43) Veröffentlichungstag der Anmeldung: **02.04.2025**
(21) Anmeldenummer: 24202306.7
(22) Anmeldetag: 24.09.2024
(51) Int. Cl.: E06B 3/673, B32B 7/05, B32B 17/06

(54) **VERFAHREN UND VORRICHTUNG ZUM ZUSAMMENBAUEN EINER ZWEI AUSSENGLÄSER UND EIN DAZWISCHEN LIEGENDES DÜNNGLAS ENTHALTENDEN DREIFACH-ISOLIERGLASSCHEIBE**

(30) Priorität: 26.09.2023 DE 102023126130
(71) Anmelder: Glaston Germany GmbH, 75242 Neuhausen-Hamberg (DE)
(72) Erfinder: Schweigert, Tobias, 75242 Neuhausen (DE); Kammerer, Stephan, 75242 Neuhausen (DE)
(74) Vertreter: Twelmeier Mommer & Partner

(57) **Zusammenfassung**

Beschrieben wird ein Verfahren und eine Vorrichtung zum Zusammenbauen einer zwei Außengläser (12, 13) und ein dazwischen liegendes Dünnglas (11) enthaltenden Dreifach-Isolierglasscheibe (10) mit folgenden Schritten: ein stehendes Dünnglas (11) wird in eine erste Pressstation (5) gefördert; ein erster flexibler Abstandhalterstrang (14) wird auf ein erstes Außenglas (12) aufgetragen, welches danach in der ersten Pressstation (5) mit dem Dünnglas (11) zu einer Glasbaugruppe (16) zusammengefügt wird; ein zweiter flexibler Abstandhalterstrang (15) wird auf das zweite Außenglas (13) aufgetragen; die Glasbaugruppe (16) wird stehend aus der ersten Pressstation (5) in eine Drehstation (6) gefördert und dort um eine aufrecht stehende Drehachse (66) gedreht; nach dem Drehen wird die Glasbaugruppe (16) stehend aus der Drehstation (6) in eine zweite Pressstation (8) gefördert; das zweite Außenglas (13) wird stehend durch die erste Pressstation (5) und die Drehstation (6) hindurch in die zweite Pressstation (8) gefördert; in der zweiten Pressstation (8) wird die Glasbaugruppe (16) und das zweite Außenglas (13) zu einer Dreifach-Isolierglasscheibe (10) zusammengefügt.

## Beschreibung

Die Erfindung geht von einem Verfahren und einer Vorrichtung zum Zusammenbauen einer Dreifach-Isolierglasscheibe aus. Dreifach-Isolierglasscheiben werden industriell in großer Stückzahl in Fertigungslinien hergestellt, wobei eine erste, eine zweite und eine dritte Glastafel nacheinander einer Vorrichtung mit einer Auftragestation und einer der Auftragestation nachgeordneten Pressstation zugeführt werden. Jede der Stationen hat einen Waagerechtförderer, auf dem die Glastafeln aufrecht stehend hintereinander transportiert werden. Jedem Waagerechtförderer ist eine Stützwand zugeordnet, an welcher sich die stehenden Glastafeln um einige Grad nach hinten geneigt abstützen. Die erste und dritte Glastafel bilden jeweils ein Außenglas der fertigen Isolierglasscheibe. Die zweite Glastafel bildet bei der fertigen Isolierglasscheibe das Mittelglas. In der Auftragestation wird auf die zweite und dritte Glastafel jeweils ein flexibler Abstandhalterstrang aufgetragen. In der Pressstation werden die drei Glastafeln zu einer Dreifach-Isolierglasscheibe zusammengebaut und gegebenenfalls mit einem von Luft verschiedenen Gas gefüllt.

Aus der WO 2020/028056 A1 sind Dreifach-Isolierglasscheiben bekannt, bei denen das Mittelglas durch ein Dünnglas gebildet wird. Die Isolierglasscheibe weist ein Dünnglas mit einer Dicke von 0,5 mm zwischen zwei Außengläsern mit einer Dicke von jeweils 5 mm auf. Das Dünnglas ist dementsprechend instabil. Es verbiegt sich und kann sehr leicht brechen. Isolierglasscheiben mit Dünnglas, welches eine Dicke von 2 mm oder weniger aufweist, können aufgrund der Schwierigkeiten bei Transport und Handling des Dünnglases auf den bekannten industriellen Fertigungslinie, bei denen die Glastafeln stehend auf einem einspurigen Waagerechtförderer transportiert und verarbeitet werden, bislang nicht hergestellt werden. Sie wurden deshalb bisher vor allem in Handarbeit unter Verwendung von starren, vorgefertigten Abstandhalterrahmen hergestellt. Der Zeitaufwand für das Zusammenbauen von solchen Isolierglasscheiben ist deshalb bislang sehr hoch.

Des Weiteren sind in der EP 2 802 727 B1 und der DE 10 2019 123 700 A1 nicht gattungsgemäße Vorrichtungen und Verfahren zum Zusammenbauen von Isolierglasscheiben mit Drehstationen und Pressstation beschrieben, welche jeweils zwei Waagerechtförderer mit parallelen Förderbahnen nebeneinander enthalten. Es können also zwei Glastafeln nebeneinander in einer Station stehen und transportiert werden. Die beiden Glastafeln stehen V-förmig in der Station und stützen sich an zwei gegenüberliegenden Stützwänden ab, welche ebenfalls V-förmig in entgegengesetzte Richtungen geneigt sind. Die beiden Pressplatten in derartigen Pressstation stehen somit ebenfalls V-förmig zueinander und müssen dementsprechend bei dem Pressvorgang zueinander verschwenkt werden. Derartige Vorrichtungen und Verfahren wurden in der Patentliteratur hin und wieder beschrieben, haben jedoch bis heute keinen Eingang in die industrielle Fertigung von Isolierglasscheiben gefunden.

Der Erfindung liegt die Aufgabe zugrunde, ein Verfahren und eine Vorrichtung zum Zusammenbauen einer zwei Außengläser und ein dazwischen liegendes Dünnglas enthaltenden Dreifach-Isolierglasscheibe zu schaffen, bei dem insbesondere die Zeit für die Herstellung einer solchen Isolierglasscheibe verringert ist.

Die Aufgabe der Erfindung wird durch ein Verfahren mit den Merkmalen des Anspruchs 1 und eine Vorrichtung mit den Merkmalen des Anspruchs 5 gelöst. Vorteilhafte Weiterbildungen sind Gegenstand von Unteransprüchen.

Bei dem erfindungsgemäßen Verfahren wird ein stehendes Dünnglas durch eine erste Auftragestation hindurch in eine erste Pressstation gefördert. Das Dünnglas wird somit als erste Glastafel zugeführt. Das Dünnglas wird auf seiner Unterkante stehend in die erste Pressstation hineingefördert. Das Dünnglas wird unterbrechungsfrei, also ohne anzuhalten und ohne Bearbeitung durch die Auftragestation auf seinem Rand stehend durch die Auftragestation hindurchgefördert. Es wird also kein Abstandhalterstrang auf das Dünnglas aufgetragen. Als zweite Glastafel wird ein erstes Außenglas zugeführt. Das erste Außenglas wird stehend in die Auftragestation hineingefördert. In der Auftragestation wird ein erster flexibler Abstandhalterstrang auf das erste Außenglas aufgetragen, sodass der erste Abstandhalterstrang einen rahmenförmigen Abstandhalter auf dem ersten Außenglas bildet. Nach dem Auftragen des Abstandhalterstrangs wird das erste Außenglas stehend aus der Auftragestation in die erste Pressstation gefördert. Als dritte Glastafel wird ein zweites Außenglas zugeführt. Das zweite Außenglas wird stehend in die Auftragestation hineingefördert. In der Auftragestation wird ein zweiter flexibler Abstandhalterstrang auf das zweite Außenglas aufgetragen, sodass der zweite Abstandhalterstrang einen rahmenförmigen Abstandhalter auf dem zweiten Außenglas bildet. In der ersten Pressstation wird das Dünnglas und das erste Außenglas zu einer Glasbaugruppe zusammengefügt. Beim Zusammenfügen sind Dünnglas und Außenglas parallel zueinander. Der Abstand des Dünnglases zu dem ersten Außenglas wird verringert, bis das Dünnglas auf dem ersten Abstandhalterstrang aufliegt und einen vordefinierten Abstand zu dem ersten Außenglas aufweist. Die Glasbaugruppe wird stehend aus der ersten Pressstation in eine Drehstation gefördert und dort um eine aufrecht stehende Drehachse gedreht. Nach dem Drehen wird die Glasbaugruppe stehend aus der Drehstation in eine zweite Pressstation gefördert. Das zweite Außenglas wird stehend aus der Auftragestation durch die erste Pressstation und die Drehstation hindurch in die zweite Pressstation gefördert. Das zweite Außenglas wird durch die erste Pressstation hindurchgefördert, nachdem die Glasbaugruppe die erste Pressstation verlassen hat. Das zweite Außenglas wird unterbrechungsfrei und ohne Bearbeitung durch die erste Pressstation hindurch transportiert. In der zweiten Pressstation wird die Glasbaugruppe und das zweite Außenglas zu einer Dreifach-Isolierglasscheibe zusammengefügt. Beim Zusammenfügen sind die Glasbaugruppe und das zweite Außenglas parallel zueinander. Der Abstand der Glasbaugruppe zu dem zweiten Außenglas wird verringert, bis das Dünnglas auf dem zweiten Abstandhalterstrang aufliegt und das erste Außenglas einen vordefinierten Abstand zu dem zweiten Außenglas aufweist. Nach dem Zusammenfügen wird die Dreifach-Isolierglasscheibe stehend aus der zweiten Pressstation herausgefördert.

Das Dünnglas ist eine Glastafel mit einer Dicke von 2 mm oder weniger. Das Dünnglas bildet ein Mittelglas oder Innenglas in der fertigen Dreifach-Isolierglasscheibe. Ein Außenglas ist eine Glastafel mit zwei sich gegenüberliegenden Oberflächen, von denen eine erste Oberfläche in der fertigen Isolierglasscheibe dem Dünnglas zugewandt ist und eine zweite Oberfläche an der fertigen Glasscheibe nach außen weist. Die erste Oberfläche des Außenglases bildet somit eine Innenseite in der fertigen Glasscheibe. Die zweite Oberfläche des Außenglases bildet somit eine Außenseite der fertigen Isolierglasscheibe. Die Dicke eines Außenglases kann über 2 mm bis 15 mm betragen. Sie kann insbesondere im Bereich von 3 mm bis 8 mm liegen.

Die erfindungsgemäße Vorrichtung zum Zusammenbauen einer zwei Außengläser und ein dazwischen liegendes Dünnglas enthaltenden Dreifach-Isolierglasscheibe enthält eine Auftragestation. Die Auftragestation ist zum Auftragen eines flexiblen Abstandhalterstrangs entlang eines Randes eines stehenden Außenglas eingerichtet. Die Dreifach-Isolierglasscheibe weist jeweils sowohl zwischen dem Dünnglas und dem ersten Außenglas als auch zwischen dem Dünnglas und dem zweiten Außenglas jeweils einen flexiblen Abstandhalterstrang auf. Eine erste Pressstation ist nachfolgend der Auftragestation angeordnet. Die erste Pressstation hat einen Waagerechtförderer und zwei parallele Pressplatten. Die erste Pressstation ist zum Zusammenfügen eines Dünnglases und eines ersten mit einem flexiblen Abstandhalterstrang versehenen Außenglases zu einer Glasbaugruppe eingerichtet. Eine Drehstation ist nachfolgend der ersten Pressstation angeordnet. Die Drehstation hat zwei parallele Stützwände und einen Waagerechtförderer. Der Waagerechtförderer ist den beiden Stützwänden zugeordnet und mit den beiden Stützwänden gemeinsam um eine aufrechte Drehachse drehbar. Die Drehstation ist eingerichtet, eine auf dem Waagerechtförderer stehende Glastafel 180° um eine aufrechte stehende Drehachse zu drehen. Die Drehachse ist entlang der Förderrichtung gesehen mittig in Bezug auf den Waagerechtförderer angeordnet. Dadurch steht der Waagerechtförderer nach einer Drehung um 180° wieder in derselben Linie wie vor der Drehung. Eine zweite Pressstation ist nachfolgend der Drehstation angeordnet. Die zweite Pressstation hat einen Waagerechtförderer und zwei parallele Pressplatten. Sowohl bei der ersten Pressstation als auch bei der zweiten Pressstation ist der Abstand der beiden Pressplatten jeweils zueinander veränderbar. Bei einer Änderung des Abstandes der beiden Pressplatten einer Pressstation bleiben die beiden Pressplatten parallel zueinander orientiert. Die zweite Pressstation ist eingerichtet, um ein Dünnglas einer Glasbaugruppe mit einem zweiten Außenglas, das mit einem flexiblen Abstandhalterstrang versehen ist, zusammenzufügen. Sowohl die Drehstation als auch die beiden Pressstationen, insbesondere alle Stationen der erfindungsgemäßen Vorrichtung, können jeweils nur einen einzigen einspurigen Waagerechtförderer enthalten. Mit "einspurig" wird ein Waagerechtförderer bezeichnet, welcher nur eine Förderbahn aufweist. Der Waagerechtförderer kann zum geradlinigen Fördern stehender Glastafeln durch die jeweilige Station hindurch eingerichtet sein. Der Waagerechtförderer kann mehrere in einer Zeile angeordnete Transportrollen und/oder einen horizontal verlaufenden Förderriemen enthalten, um eine auf ihrer Unterkante stehende Glastafel zu transportieren. Alle Waagerechtförderer können entlang einer geraden Linie hintereinander angeordnet sein.

Sowohl die erste Pressstation als auch die zweite Pressstation sind wie folgt ausgebildet. Eine erste der beiden Pressplatten bildet eine aufrechte Stützwand für eine stehend auf dem Waagerechtförderer transportierte Glastafel. Mit der Eigenschaft "aufrecht" ist gemeint, dass die Stützwand nicht exakt vertikal bzw. lotrecht steht, sondern um einige Grad nach hinten geneigt ist, damit eine aufrecht stehende und sich an die Stützwand anlehnende Glastafel nicht nach vorne, also von der Stützwand weg, umkippt. Eine Stützwand kann eine Neigung von etwa 6° bis 8° zur Vertikalen aufweisen. Die erste Pressplatte kann ortsfest angeordnet sein. Eine zweite der beiden Pressplatten kann quer zu der ersten Pressplatte verschiebbar sein, um den Abstand der beiden Pressplatten zueinander zu verändern. Bei der Verschiebung der zweiten Pressplatte bleibt die Parallelität der zweiten Pressplatte zu der ersten Pressplatte erhalten. Die Pressstation kann eine Ansaugeinrichtung zum Ansaugen einer Glastafel an die zweite Pressplatte aufweisen. Die Pressstation kann eingerichtet sein, den Zwischenraum zwischen den Glastafeln mit einem von Luft verschiedenen Gas zu füllen. Der Aufbau und die Funktionsweise derartiger Pressstationen ist durch jahrzehntelangen Einsatz bei der industriellen Herstellung von Isolierglasscheiben sowie aus EP 0 539 407 B1 und EP 1 769 130 B1 an sich bekannt und braucht deshalb nicht näher beschrieben zu werden.

In der Auftragestation wird in an sich bekannter Weise auf eine stehende Glastafel, nämlich auf das erste und zweite Außenglas, entlang ihres Randes ein flexibler Abstandhalterstrang aufgetragen. Es wird also kein vormontierter Abstandhalterrahmen auf die Glastafel aufgesetzt. Der Abstandhalterstrang kann lückenlos entlang des Randes der Glastafel aufgetragen werden. Erst durch einen entlang des gesamten Randes der Glastafel aufgetragenen Abstandhalterstrang wird ein Abstandhalterrahmen gebildet, um zwei benachbarte Glastafeln auf Abstand zu halten. Der flexible Abstandhalterstrang kann ein pastöser und sich sodann verfestigender Abstandhalterstrang aus einem thermoplastischen Material und/oder einem reaktiv vernetzenden Material sein, welches mithilfe einer Düse auf die Glastafel appliziert wird. Der flexible Abstandhalterstrang ist somit nach dem Applizieren noch heiß und/oder noch nicht vollständig ausgehärtet. Der flexible Abstandhalterstrang kann ferner als bandförmiges Material von einer Vorratsrolle abgerollt und auf die Glastafel appliziert werden. Die Auftragestation kann einen Applikationskopf enthalten, welcher wenigstens an einem Abschnitt des Randes des Außenglases entlanggeführt wird, um den Abstandhalterstrang zu applizieren.

Die Erfindung hat wesentliche Vorteile:
- Durch die Erfindung wird es im industriellen Maßstab möglich, stehendes Dünnglas mit flexiblen Abstandhaltersträngen zu einer Dreifach-Isolierglasscheibe zu verarbeiten.
- Ein stehendes Dünnglas kann zwischen zwei Außenglastafeln eingebracht werden, wobei nur auf die beiden Außenglastafeln Abstandhalterstränge aufgetragen werden. Es ist nicht nötig, auf das Dünnglas einen Abstandhalterstrang aufzubringen.
- Die Erfinder haben erkannt, dass das Applizieren von flexiblen Abstandhalterstränge auf ein Dünnglas erhebliche Probleme bereiten kann. Beim Auftragen des heißen Materials eines thermoplastischen Abstandhalterstrangs auf ein Dünnglas würde punktuell eine große Wärmemenge in das Dünnglas eingebracht, welches dadurch sehr stark verformt wird. Es wird derart wellig, dass eine weitere Verarbeitung nicht möglich wäre. Durch die vorliegende Erfindung wird dies vermieden. Ein auf das Außenglas aufgebrachter thermoplastischer Abstandhalterstrang ist beim Zusammenfügen mit dem Dünnglas in der Pressstation schon ausreichend abgekühlt. Außerdem wird die Wärme beim Aufsetzen des Dünnglases auf den fertigen Abstandhalter nicht punktuell in das Dünnglas eingebracht, sondern im Wesentlichen gleichmäßig entlang des gesamten Randes. Hierdurch können unzulässig hohe Verformungen und Welligkeiten des Dünnglases sowie ein unzulässig hoher Verzug und Spannungseintrag in das Dünnglas vermieden werden.
- Die Erfinder haben ferner erkannt, dass ein flexibler Abstandhalterstrang, welcher von einer Vorratsrolle abgezogen und maschinell auf eine Glastafel appliziert wird, unter Vorspannung steht, welche bei einer direkten Applikation auf ein Dünnglas zu einer unzulässig hohen Krümmung des Dünnglases führen würde.
- Die vorliegende Erfindung ermöglicht, dass flexible Abstandhalterstränge ausschließlich auf die beiden stabilen Außengläser aufgetragen werden. Diese können die beim Applizieren des Abstandhalterstrangs in die Glastafel eingebrachten Spannungen aufgrund ihrer großen Eigenstabilität ausreichend gut kompensieren. Wird anschließend ein Außenglas mit dem entlang seines des gesamten Randes aufgebrachten Abstandhalterstrang mit dem Dünnglas zusammengesetzt, dann verursacht dies keine unzulässig hohen Spannungen und/oder Verformungen des Dünnglases mehr.
- Dünnglas enthaltende Dreifach-Isolierglasscheiben lassen sich mit der Erfindung sehr schnell und mit niedrigen Taktzeiten herstellen. Dünnglas enthaltende Dreifach-Isolierglasscheiben werden dadurch in großer Stückzahl verfügbar und können in gleicher Dicke wie bisherige Zweifach-Isolierglasscheiben hergestellt werden. Alte Zweifach-Isolierglasscheiben können dadurch gegen besser isolierende Dreifach-Isolierglasscheiben ausgetauscht werden, ohne dass an Fensterrahmen bauliche Änderungen erforderlich sind. Dadurch kann die Modernisierung von Gebäuden vereinfacht werden.
- Durch den noch nicht rahmenförmig vormontierten Abstandhalter können einfach und flexibel Glastafeln in Sonderformaten und/oder mit nicht rechteckiger Außenkontur zu Dreifach-Isolierglasscheiben verarbeitet werden.
- Mit der Erfindung können bestehende einspurige Fertigungslinien zur Herstellung von Isolierglas mit relativ wenig Aufwand und mit relativ wenig zusätzlichem Platzbedarf nachgerüstet werden, um sie für ein Zusammenbauen von Dünnglas enthaltenden Dreifach-Isolierglasscheiben zu ertüchtigen.

Ein weiterer Vorteil der erfindungsgemäßen Vorrichtung ist, dass sich damit auch Zweifach- und Dreifach-Isolierglasscheiben ohne Dünnglas sehr schnell und mit sehr geringer Taktzeit herstellen lassen, da hierbei in der ersten und zweiten Pressstation gleichzeitig jeweils eine Isolierglasscheibe zusammengebaut und gegebenenfalls mit Gas gefüllt werden kann. Die Drehstation ist hierbei nicht in Funktion. Glastafeln für eine erste Isolierglasscheibe werden durch die erste Pressstation und die Drehstation hindurch in die zweite Pressstation transportiert. Dabei werden in der ersten Pressstation und der Drehstation keine Bearbeitungsschritte an der ersten Isolierglasscheibe vorgenommen. Während die erste Isolierglasscheibe in der zweiten Pressstation zusammengebaut und gegebenenfalls mit Gas gefüllt wird, können bereits Glastafeln für eine zweite Isolierglasscheibe in die erste Pressstation hineingefördert und dort zusammengebaut werden. Der Zusammenbau und das Gasfüllen der zweiten Isolierglasscheibe in der ersten Pressstation läuft also parallel zum Zusammenbau und Gasfüllen der ersten Isolierglasscheibe in der zweiten Pressstation ab. Anschließend wird die zweite Isolierglasscheibe ohne Bearbeitungsschritte durch die Drehstation und die zweite Pressstation hindurch transportiert. Da das Zusammenbauen und Gasfüllen in der Pressstation mehr Zeit in Anspruch nimmt als die Bearbeitungen in den anderen Stationen einer Fertigungslinie, kann die Produktivität der Fertigungslinie mit einer erfindungsgemäßen Vorrichtung insgesamt stark gesteigert werden.

Die Vorrichtung kann eine Steuerung enthalten, welche mit der Auftragestation, der Drehstation und den beiden Pressstation gekoppelt ist. Die Steuerung ist eingerichtet, die Stationen zum Zusammenbauen eines Dünnglases und zweier Außengläser zu einer Dreifach-Isolierglasscheibe zu steuern. Die Vorrichtung kann eine Visitierstation mit einem Waagerechtförderer und mehreren, insbesondere drei, Stützbalken zum Abstützen einer auf dem Waagerechtförderer stehenden Glastafel enthalten. Die Stützbalken erstrecken sich horizontal. Die Stützbalken sind äquidistant zueinander nach oben und unten verschiebbar. Der Abstand der Stützbalken zum Waagerechtförderer ist somit verstellbar.

In weiterer Ausgestaltung des Verfahrens wird das sich an der ersten Pressplatte abstützende Dünnglas in der ersten Pressstation an die zweite Pressplatte angesaugt. Hierzu kann die erste Pressstation eine Ansaugeinrichtung zum Ansaugen des Dünnglases an die zweite Pressplatte aufweisen. Danach wird die zweite Pressplatte mit dem daran angesaugten Dünnglas von der ersten Pressplatte wegbewegt. Dies geschieht, indem der Abstand der beiden Pressplatten zueinander vergrößert wird. Das erste Außenglas wird in die erste Pressstation hineingefördert, wobei es sich an der ersten Pressplatte abstützt. Das erste Außenglas wird in der ersten Pressstation deckungsgleich oder konzentrisch zu dem an die zweite Pressplatte angesaugten Dünnglas positioniert. Nach dem Zusammenfügen des Dünnglases mit dem ersten Außenglas wird das Ansaugen des Dünnglases an die zweite Pressplatte beendet. Die Kantenlänge des Dünnglases kann einige Millimeter, beispielsweise 3 mm, kleiner als die Kantenlänge des Außenglases sein. In einem solchen Fall kann in der ersten Pressstation das Dünnglas angehoben und/oder das erste Außenglas abgesenkt werden, bis das Dünnglas konzentrisch zum ersten Außenglas positioniert ist. Das Anheben und/oder Absenken kann beispielsweise dadurch erfolgen, dass ein Förderriemen des Waagerechtförderers in der ersten Pressstation um einen entsprechenden Winkel schräg gestellt wird, bevor die auf dem Fördererriemen aufstehende Glastafel an die entsprechende Pressplatte angesaugt wird. Ein Schrägstellen eines Fördererriemen ist an sich bekannt und beispielsweise in der EP 1 769 130 B1 beschrieben. Das erste Außenglas und das kleinere Dünnglas werden so zueinander positioniert, dass der Rand des Dünnglases vollständig innerhalb des Randes des ersten Außenglases liegt. Eine solche Dreifach-Isolierglasscheibe wird auch als "an allen vier Seiten gestufte Scheibe" bezeichnet. Der empfindliche Rand des Dünnglases ist dadurch besser vor Beschädigungen geschützt.

In weiterer Ausgestaltung kann in der ersten Pressstation das sich an der ersten Pressplatte abstützende Dünnglas zunächst an die erste Pressplatte angesaugt werden. Die zweite Pressplatte wird an das Dünnglas angelegt, wobei das Ansaugen des Dünnglases an die erste Pressplatte fortgesetzt wird. Das Dünnglas wird an die zweite Pressplatte angesaugt, bevor das Ansaugen des Dünnglases an die erste Pressplatte beendet wird. Das Dünnglas ist also für eine gewisse Zeitspanne zwischen den beiden Pressplatten der ersten Pressstation gehalten und wird dabei von beiden Pressplatten gleichzeitig angesaugt. Dadurch kann eine besonders gute Ebenheit des Dünnglases gewährleistet werden. Ein vollflächiges Ansaugen des Dünnglases kann einen Verzug des Dünnglases beim nachfolgenden Aufsetzen auf einen noch warmen thermoplastischen Abstandhalterstrang vermindern.

In weiterer Ausgestaltung kann in der zweiten Pressstation das Außenglas der Glasbaugruppe an die zweite Pressplatte angesaugt werden. Vor dem Ansaugen stützt sich die Glasbaugruppe mit dem Dünnglas an der ersten Pressplatte ab. Die zweite Pressplatte mit der daran angesaugten Glasbaugruppe wird von der ersten Pressplatte wegbewegt. Das zweite Außenglas wird in die zweite Pressstation hineingefördert, wobei es sich an der ersten Pressplatte abstützt. Das zweite Außenglas wird in der zweiten Pressstation deckungsgleich oder konzentrisch zu dem an die zweite Pressplatte angesaugten erste Außenglas positioniert. Nach dem Zusammenfügen der Glasbaugruppe mit dem zweiten Außenglas wird das Ansaugen des ersten Außenglases an die zweite Pressplatte beendet.

Sowohl in Bezug auf das erste Außenglas als auch in Bezug auf das zweite Außenglas wird der Abstandhalterstrang auf eine Oberfläche des Außenglases aufgetragen, welche in der fertigen Dreifach-Isolierglasscheibe dem Dünnglas zugewandt ist, also später im Innern der fertigen Dreifach-Isolierglasscheibe zu liegen kommt. In der Auftragestation wird das jeweilige stehende Außenglas an seiner später eine Außenseite der Isolierglasscheibe bildenden Oberfläche abgestützt. Das erste Außenglas wird während des stehenden Transportes in die erste Pressstation an seiner später eine Außenseite der Isolierglasscheibe bildenden Oberfläche abgestützt. Nach dem Zusammenfügen des Dünnglases mit dem ersten Außenglas wird die stehende Glasbaugruppe in der ersten Pressstation am ersten Außenglas abgestützt. Die Glasbaugruppe wird am ersten Außenglas abgestützt, während sie stehend in die Drehstation hineintransportiert wird. Die Drehstation ist eingerichtet, eine Glasbaugruppe um eine aufrecht stehende, insbesondere vertikale, Drehachse zu drehen und die gedrehte Glasbaugruppe an eine nachfolgende Station weiter zu fördern. Die Drehstation ist außerdem eingerichtet, ein mit einem Abstandhalterstrang versehenes Außenglas ungedreht an eine nachfolgende Station weiter zu fördern. Während des Drehens der Glasbaugruppe in der Drehstation wird die Seite gewechselt, an welcher die Glasbaugruppe abgestützt wird. Hierzu können die beiden parallel zueinander stehenden Stützwände der Drehstation um eine horizontale Achse gekippt werden. Am Ende des Vorgangs wird die stehende Glasbaugruppe in der Drehstation am Dünnglas abgestützt. Die Glasbaugruppe wird am Dünnglas abgestützt, während sie stehend in die zweite Pressstation hineintransportiert wird. Das zweite Außenglas wird während des stehenden Transportes in die zweite Pressstation an seiner später eine Außenseite der Isolierglasscheibe bildenden Oberfläche abgestützt. Das zweite Außenglas wird ohne Drehung durch die Drehstation hindurch transportiert. Die zusammengebaute Dreifach-Isolierglasscheibe wird in der zweiten Pressstation, und insbesondere beim Abtransport, am zweiten Außenglas abgestützt.

In weiterer Ausgestaltung kann die Drehstation ein ortsfest auf dem Fußboden stehendes Untergestell aufweisen. An dem Untergestell ist ein Drehrahmen angebracht. Der Drehrahmen ist relativ zu dem Untergestell drehbar. Zwischen dem Drehrahmen und dem Untergestell kann hierzu ein Drehgelenk angeordnet sein. Die Drehachse des Drehgelenks verläuft vertikal bzw. lotrecht. An dem Drehrahmen ist ein Kipprahmen angebracht. Der Kipprahmen ist um eine horizontale Kippachse relativ zu dem Drehrahmen kippbar. Zwischen dem Drehrahmen und dem Kipprahmen ist ein Kippgelenk angeordnet. Die Stützwände und der Waagerechtförderer sind an dem Kipprahmen befestigt, insbesondere relativ zueinander unbeweglich. Die Kippachse verläuft parallel zur Förderrichtung des Waagerechtförderers. Die Kippachse steht senkrecht zur Drehachse. Das Kippgelenk und der Kipprahmen sowie alle daran befestigten Teile drehen sich während der Drehung mit dem Drehrahmen in einer horizontalen Ebene. Dadurch kann verhindert werden, dass der Waagerechtförderer und/oder die Stützwände mit einem ihrer äußeren Enden beim Drehen auf dem Fußboden aufsetzen.

In weiterer Ausgestaltung kann eine der Stationen eine Luftkissenstützwand mit einer ebenen Stützfläche aufweisen. Die Stützwand ist zum Abstützen einer stehend auf dem Waagerechtförderer transportierten Glastafel eingerichtet. Eine Vielzahl von Luftkanälen kann in die Stützfläche münden. Aus den Luftkanälen tritt bei Beaufschlagung mit Überdruck ein Luftstrom schräg zur Stützfläche aus. Dadurch entsteht auf der Stützfläche ein Luftkissen, auf welchem die transportierte Glastafel, insbesondere das Dünnglas, sich abstützen und gleiten kann, ohne die Stützfläche zu berühren. Es wird eine schräg nach oben gerichtete Blassströmung an der Stützwand erzeugt. Ein vor der Station stehender Maschinenbediener wird dadurch nicht direkt angeblasen. Zumindest einer der Luftkanäle, insbesondere jeder der Luftkanäle, kann einen Endkanalabschnitt enthalten, welcher schräg zur Stützfläche verläuft. Der Endkanalabschnitt kann in einem Vertikalschnitt durch die Stützwand in einem Winkel von 45° oder weniger, insbesondere von 30° bis 45°, zur Stützfläche verlaufen. Durch eine derart schräge Blasströmung kann ein Luftpolster erzeugt werden, welches den Transport von Dünnglas wesentlich erleichtert. Insbesondere die erste Pressstation kann eine derartige Luftkissenstützwand enthalten. Die Luftkissenstützwand kann durch die erste Pressplatte gebildet werden. Zwischen der Auftragestation und der ersten Pressstation kann eine Zwischenstation angeordnet sein, welche einen Waagerechtförderer und eine erfindungsgemäße Luftkissenstützwand enthält. Eine Zwischenstation kann zum Zwischenspeichern einer Glastafel dienen. Eine Glastafel, welche die der Zwischenstation vorgeordnete Station verlassen hat, kann in der Zwischenstation warten, bis sie in eine der Zwischenstation nachgeordnete Station hineintransportiert werden kann. Die erfindungsgemäße Vorrichtung kann mehrere derartige Zwischenstationen enthalten.

Wenigstens eine der Pressplatten, insbesondere die erste Pressplatte der ersten Pressstation, kann eine ebene Stützfläche aufweisen, in welcher eine Vielzahl von Luftkanälen mündet, wobei die Luftkanäle bei Beaufschlagung mit Unterdruck Ansaugeinrichtungen bilden, um ein Dünnglas eben an die Stützfläche anzusaugen. Die Luftkanäle in der Pressplatte können wahlweise mit Unterdruck oder mit Überdruck beaufschlagbar sein. Dadurch können die Funktionen einer Ansaugeinrichtung und einer Luftkissenstützwand in der Pressplatte kombiniert werden. Eine Pressplatte kann dadurch wahlweise als Luftkissenstützwand für den Transport wirken oder eine Glastafel ansaugen, um sie beim Zusammenbauen zu fixieren.

Die Stützfläche kann zumindest eine Vertiefung aufweisen, welche mit einem Endkanalabschnitt des Luftkanals in Verbindung steht. Die Vertiefung kann kreisförmig sein, insbesondere mit einem Durchmesser von 20 mm oder weniger. Es kann eine Vertiefung für jeden Endkanalabschnitt vorgesehen sein. Die Vertiefung kann den Endkanalabschnitt umgeben. Die Vertiefung ist zur Stützfläche hin offen. Die Stützfläche kann zumindest eine Nut aufweisen, welche mit einem Endkanalabschnitt in Verbindung steht. Die Nut kann insbesondere von einer den Endkanalabschnitt umgebenden Vertiefung ausgehen. Die Nut verläuft entlang der Stützfläche und ist zur Stützfläche hin offen. Der Endkanalabschnitt kann schräg in die Vertiefung oder die Nut münden. Alle Endkanalabschnitte können parallel zueinander verlaufen.

Bei der Verarbeitung von Dünnglas mit einer Dicke von 2 mm oder weniger beträgt die Breite der Nut 20 mm oder weniger. Bei der Verarbeitung von Dünnglas mit einer Dicke von 1,5 mm oder weniger kann die Breite der Nut insbesondere 15 mm oder weniger betragen. Bei der Verarbeitung von Dünnglas mit einer Dicke von 1 mm oder weniger kann die Breite der Nut insbesondere 10 mm oder weniger betragen. Hierdurch kann sichergestellt werden, dass sich das ohne Unterstützung über die Nut erstreckende Dünnglas durch den im Luftkanal herrschenden Unterdruck nicht unzulässig verformt. Das Dünnglas kann dadurch in besonders guter Weise eben und ohne unerwünschte Welligkeit an die Stützfläche angesaugt werden.

Die Nut kann wenigstens zwei schräg zueinander verlaufende Nutabschnitte enthalten. Beide Nutabschnitte verlaufen jeweils geradlinig. Jeder der Nutabschnitte kann eine Länge von 60 mm oder weniger aufweisen. Dadurch kann besonders gut verhindert werden, dass sich das Dünnglas durch den Unterdruck elastisch verformt und in die Nut hineinwölbt. In der Stützfläche können mehrere Nuten angeordnet sein, die mit einem Endkanalabschnitt in Verbindung stehen. In einer Draufsicht auf die Stützfläche können mehrere Nuten radial auf den einen Endkanalabschnitt zu laufen. Die Nuten können beispielsweise strahlenförmig um den einen Endkanalabschnitt herum angeordnet sein.

In weiterer Ausgestaltung kann die Stützfläche einen ersten Stützbereich und einen zweiten Stützbereich aufweisen. Eine Luftkanaldichte in dem ersten Stützbereich kann größer als in dem zweiten Stützbereich der Stützfläche sein. Die Luftkanaldichte in einem Stützbereich ist definiert als Anzahl von Luftkanälen, die in diesen Stützbereich münden, dividiert durch die Gesamtfläche dieses Stützbereichs. Der erste Stützbereich kann sich entlang des Randes im unteren Bereich der Stützwand erstrecken. Bei Beaufschlagung mit Überdruck tritt im ersten Stützbereich mehr Luft aus. Es kann zuverlässig verhindert werden, dass das Dünnglas beim Transport auf dem Waagerechtförderer mit seiner Unterkante an der Stützfläche anschlägt. Ein von den Luftkanälen besaugter Flächenanteil in dem ersten Stützbereich kann größer sein als in dem zweiten Stützbereich, insbesondere indem die mit Unterdruck beaufschlagte Fläche durch Vertiefungen und/oder Nuten vergrößert ist. Der besaugte Flächenanteil in einem Stützbereich ist die mit Unterdruck beaufschlagte Fläche dividiert durch die Gesamtfläche dieses Stützbereichs. Das Dünnglas kann dadurch in besonders ebener Weise an die Stützfläche angesaugt werden.

Weitere Einzelheiten und Vorteile der Erfindung werden an Ausführungsbeispielen der Erfindung unter Bezugnahme auf die beigefügten Zeichnungen erläutert. Gleiche und einander entsprechende Komponenten sind darin mit übereinstimmenden Bezugszeichen versehen. Es zeigen:
- Figur 1: eine schematische Draufsicht eines Aufbaus einer erfindungsgemäßen Vorrichtung sowie einige Zwischenschritte beim Zusammenbauen einer Dreifach-Isolierglasscheibe,
- Figur 2: die Vorrichtung der Figur 1 mit weiteren Zwischenschritten beim Zusammenbauen der Dreifach-Isolierglasscheibe,
- Figur 3: eine schematische Seitenansicht einer fertigen Dreifach-Isolierglasscheibe,
- Figur 4: eine schematische Frontansicht einer Visitierstation für die erfindungsgemäße Vorrichtung,
- Figur 5: eine schematische Frontansicht einer Drehstation für die erfindungsgemäße Vorrichtung,
- Figur 6: eine schematische Draufsicht auf die Drehstation der Figur 5,
- Figur 7: eine schematische Seitenansicht der Drehstation der Figur 5,
- Figur 8: eine schematische Frontansicht einer Stützwand für die erfindungsgemäße Vorrichtung,
- Figur 9: eine vergrößerte Darstellung eines Bereichs X der Figur 8,
- Figur 10: eine vergrößerte Darstellung eines Vertikalschnitts durch die Stützwand im Bereich X.

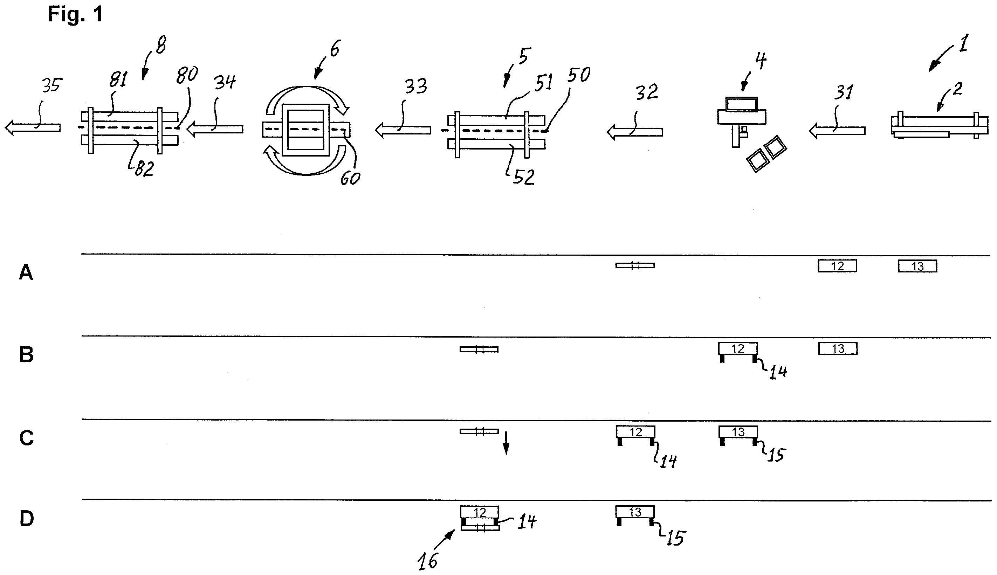

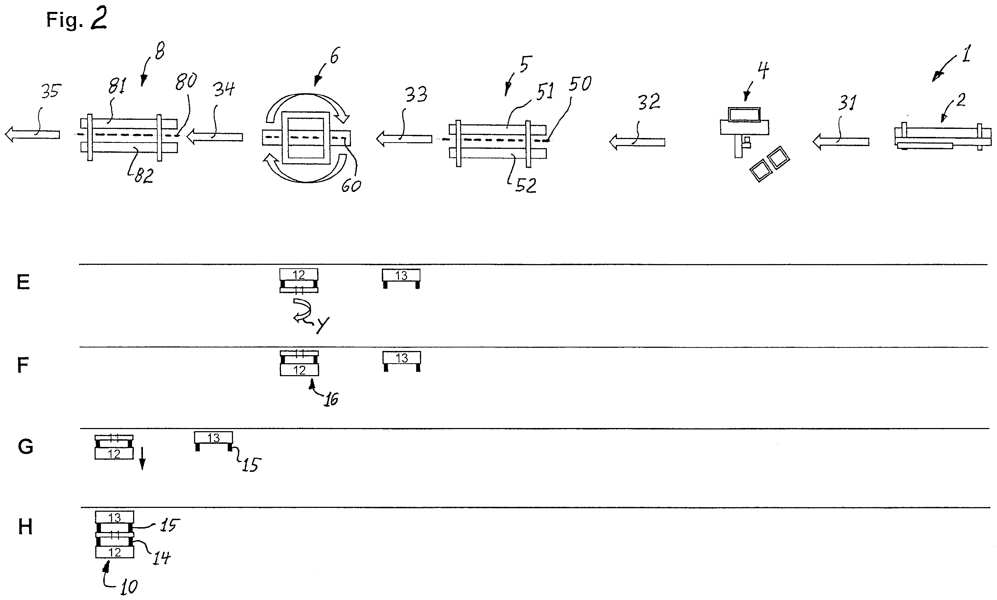

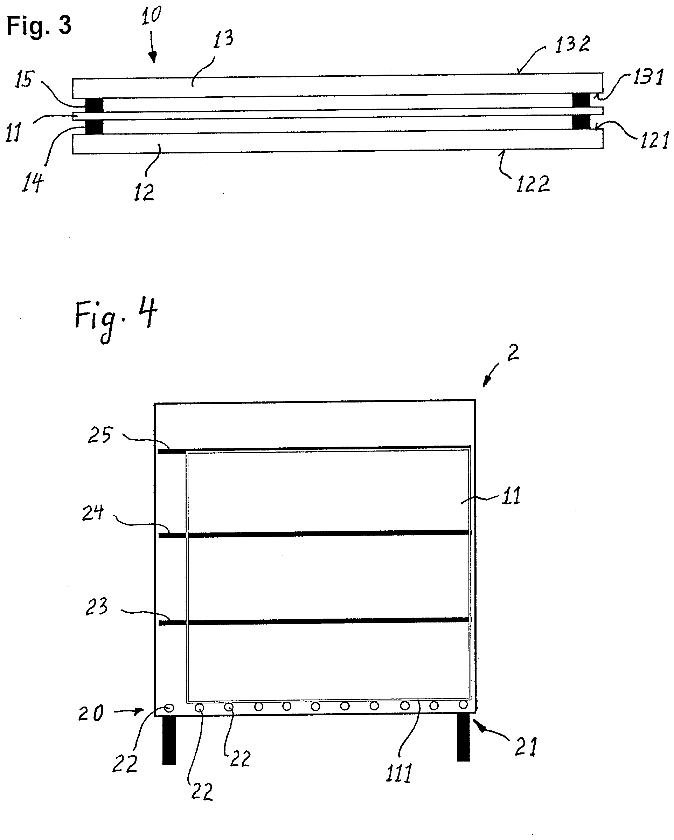

In den Figuren 1 und 2 ist schematisch eine oftmals auch als Fertigungslinie bezeichnete Vorrichtung 1 zum Zusammenbauen einer Dreifach-Isolierglasscheibe 10 dargestellt, welche in Figur 3 gezeigt ist. Die Isolierglasscheibe 10 enthält drei Glastafeln 11, 12 und 13. Bei der ersten Glastafel 11 handelt es sich um ein Dünnglas mit einer Dicke von 1 mm oder weniger. Die zweite Glastafel 12 ist ein erstes Außenglas mit einer ersten Oberfläche 121, welche dem Dünnglas 11 zugewandt ist und eine Innenseite der Isolierglasscheibe 10 bildet. Eine zweite Oberfläche 122 des Außenglases 12 bildet eine Außenseite der Isolierglasscheibe 10. Die dritte Glastafel 13 ist ein zweites Außenglas, welches eine erste Oberfläche 131 und eine zweite Oberfläche 132 aufweist, die entsprechend eine Innenseite bzw. eine Außenseite der Isolierglasscheibe 10 bilden. Ein erster flexibler Abstandhalterstrang 14 ist zwischen dem Außenglas 12 und dem Dünnglas 11 angeordnet und bildet einen an sich bekannten Abstandhalterrahmen entlang des Randes des Außenglases 12, welcher die beiden Glastafeln 11 und 12 in einem vordefinierten Abstand zueinander hält. Entsprechend ist zwischen dem Außenglas 13 und dem Dünnglas 11 ist ein zweiter flexibler Abstandhalterstrang 15 angeordnet.

Die Vorrichtung 1 enthält eine Visitierstation 2, mehrere Zwischenstationen, eine Auftragestation 4, eine erste Pressstation 5, eine Drehstation 6 und eine zweite Pressstation 8. Die Zwischenstationen 31, 32, 33 und 34 sind zwischen den anderen Stationen als Transportstrecke und/oder Zwischenspeicher vorgesehen. Die Zwischenstation 35 ist der zweiten Pressstation 8 zum Abtransport der fertigen Isolierglasscheibe 10 nachgeordnet. Die Zwischenstationen 31, 32, 33, 34 und 35 können jeweils in an sich bekannter Weise einen einspurigen Waagerechtförderer und eine Stützwand (beides nicht dargestellt) enthalten. Die Visitierstation 2, siehe Figur 4, enthält einen Waagerechtförderer 20, welcher an einem Gestell 21 angebracht ist und von eine Zeile mit mehreren antreibbaren Transportrollen 22 gebildet wird. Derartige Waagerechtförderer 20 sind an sich bekannt. Auf dem Waagerechtförderer 20 steht eine Glastafel, in dem dargestellten Zwischenschritt beispielsweise das Dünnglas 11, mit seiner Unterkante 111 auf. Die Visitierstation 2 enthält drei Stützbalken 23, 24, 25, welche horizontal verlaufen und in einer leicht zur Vertikalen geneigten Ebene liegen, um das stehende Dünnglas 11 abzustützen. Entsprechend der Höhe der zu prüfenden Glastafel werden die Stützbalken 23, 24 und 25 nach oben oder unten verschoben. Der oberste Stützbalken 25 wird so verschoben, dass er das Dünnglas 11 möglichst weit oben an seinem Rand abstützt. Die beiden Stützbalken 23 und 24 werden so verschoben, dass die Abstände zwischen dem Waagerechtförderer 20 und dem Stützbalken 23 sowie zwischen den drei Stützbalken 23, 24 und 25 jeweils gleich groß sind. Das Dünnglas 11 wird dadurch sehr gut unterstützt, sodass es sich nicht unzulässig weit durchbiegt. Gleichzeitig wird nur sehr wenig Oberfläche des Dünnglases 11 durch die Stützbalken abgedeckt, sodass eventuelle Fehler im Dünnglas 11 noch sehr gut entdeckt werden können. Die Auftragestation 4 ist in an sich bekannter Weise zum Auftragen eines pastösen und sich sodann verfestigenden Abstandhalterstrangs aus einem thermoplastischen Material auf eine Glastafel eingerichtet und braucht deshalb nicht im Detail beschrieben zu werden.

Bei der Herstellung der erfindungsgemäßen Dreifach-Isolierglasscheibe 10 wird der Visitierstation 2 ein Dünnglas 11 als erste Glastafel zugeführt und dort auf Fehlerfreiheit kontrolliert. Anschließend wird das Dünnglas 11 stehend über die Zwischenstation 31 durch die Auftragestation 4 hindurch zur Zwischenstation 32 gefördert. Das erste Außenglas 12 wird der Visitierstation 2 als zweite Glastafel zugeführt. Das Außenglas 12 wird nach Kontrolle auf Fehlerfreiheit in die Zwischenstation 31 gefördert. Dann wird das zweite Außenglas 13 als dritte Glastafel in die Visitierstation 2 hineingefördert und dort auf Fehlerfreiheit kontrolliert, vgl. Zwischenschritt A in Figur 1.

Die drei Glastafeln 11, 12 und 13 werden gleichzeitig weitertransportiert bis das Dünnglas 11 die erste Pressstation 5 und das Außenglas 12 die Auftragestation 4 erreicht. In der Auftragestation 4 wird der erste Abstandhalterstrang 14 auf das Außenglas 12 aufgetragen, sodass in an sich bekannter Weise ein geschlossener Abstandhalterrahmen entlang des Randes des Außenglases 12 gebildet wird. Das Außenglas 13 befindet sich in der Zwischenstation 31 in Wartestellung, vgl. Zwischenschritt B in Figur 1.

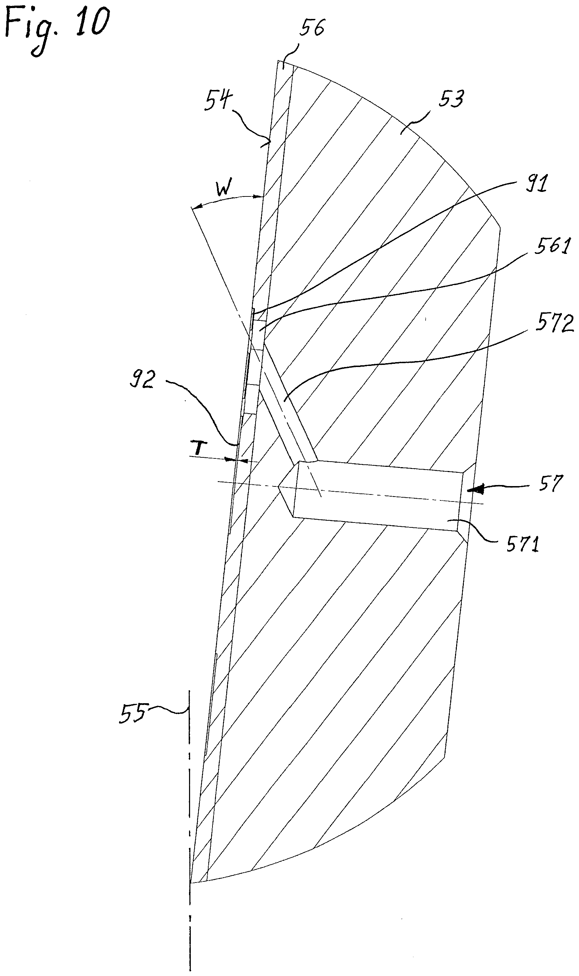

Die Pressstation 5 hat einen einspurigen Waagerechtförderer 50, eine erste Pressplatte 51 und eine zweite Pressplatte 52. Der Waagerechtförderer 50 ist in an sich bekannter Weise ausgestaltet und schematisch durch eine gestrichelte Linie angedeutet. Die erste Pressplatte 51 ist ortsfest angeordnet. Die aufrecht stehende Pressplatte 51 ist gegenüber der Vertikalen leicht nach hinten geneigt und stützt das auf dem Waagerechtförderer 50 stehende Dünnglas 11 ab, sodass es nicht nach vorne, d. h. zu der der Pressplatte 51 abgewandten Seite, umkippt. Die Pressplatte 51 bildet eine Stützwand 53 mit einer ebenen Stützfläche 54. Die Vertikale bzw. Lotrechte ist in Figur 10 als strichpunktierte Linie 55 angedeutet.

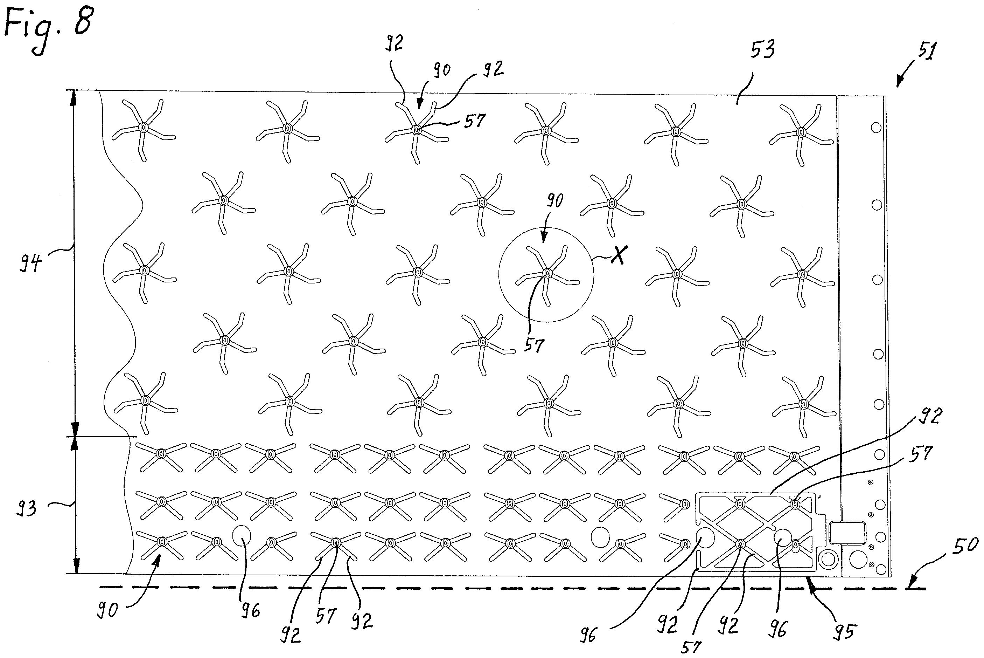

Die Stützfläche 53 weist zur Vertikalen 55 einen Winkel von 8° auf, um eine Glastafel, die auf dem Waagerechtförderer 50 steht und sich an der Stützwand 53 anlehnt, abzustützen und ein unbeabsichtigtes Umfallen nach vorne zu verhindern. Die Stützfläche 54 wird von einem Gummibelag 56 auf der Stützwand 53 gebildet. Die Stützwand 53 ist als Luftkissenstützwand ausgebildet, welche eine Vielzahl von Luftkanälen 57 enthält. Die Luftkanäle 57 münden in die Stützfläche 54, vgl. Figuren 8 bis 10. Ein erster Kanalabschnitt 571 des Luftkanals 57 wird durch ein von hinten in die Stützwand 53 gebohrtes Sackloch gebildet. Ein Endkanalabschnitt 572 des Luftkanals 57 steht mit dem Kanalabschnitt 571 in Verbindung und verläuft in einen Winkel W schräg zur Stützfläche 54. Der Winkel W beträgt 30°. Der Endkanalabschnitt 572 hat einen Durchmesser von 3 mm bis 6 mm, insbesondere von 4 mm. Bei Beaufschlagung des Luftkanals 57 mit Überdruck tritt somit ein Luftstrom schräg zur Stützfläche 54 aus. Um den aus der Stützfläche 54 austretenden Luftstrom nicht zu behindern enthält der Gummibelag 56 ein ovales Loch 561, welches den Endkanalabschnitt 572 umgibt. Der Luftkanal 57 erstreckt sich somit als Durchgangskanal durch die Stützwand 53 hindurch bis auf eine der Stützfläche 54 gegenüberliegende Seite der Stützwand 53.

Die zweite Pressplatte 52 ist parallel zu der Pressplatte 51 und zu der Stützfläche 54 angeordnet. Die Pressplatte 52 kann quer zur Förderrichtung des Waagerechtförderers 50 linear verschoben werden, sodass sich der Abstand zwischen den beiden Pressplatten 51 und 52 verändert. Die Pressplatte 52 enthält eine Ansaugeinrichtung (nicht dargestellt), mit welcher eine sich an der Pressplatte 51 abstützende Glastafel angesaugt werden kann. Die Pressplatte 52 kann anschließend mit der daran angesaugten Glastafel von der Pressplatte 51 wegbewegt werden. Der Aufbau einer Pressstation mit diesen Merkmalen ist an sich bekannt und deshalb nicht näher beschrieben.

Das Dünnglas 11 wird an die Pressplatte 52 angesaugt und mit dieser von der Pressplatte 51 wegbewegt. Dies wird nachstehend noch im Detail erläutert. Nach dem Applizieren des Abstandhalterstrang 14 auf das Außenglas 12, wird dieses in die Zwischenstation 32 gefördert. Das Außenglas 13 wird in die Auftragestation 4 hineingefördert und der zweite Abstandhalterstrang 15 wird auf das Außenglas 13 aufgetragen, vgl. Zwischenschritt C in Figur 1.

Der Waagerechtförderer 50 wird frei, wenn das an die Pressplatte 52 angesaugte Dünnglas 11 von der Pressplatte 51 wegbewegt ist. Dann kann das Außenglas 12 mit dem Waagerechtförderer 50 in die Pressstation 5 hineingefördert werden, bis es deckungsgleich zu dem Dünnglas 11 steht. Anschließend wird die Pressplatte 52 mit dem daran angesaugten Dünnglas 11 wieder in Richtung zur Pressplatte 51 bewegt bis das Dünnglas 11 auf dem Abstandhalterstrang 14 aufliegt und einem vordefinierten Abstand zu dem Außenglas 12 aufweist. Bevor das Dünnglas 11 vollständig auf dem Abstandhalterstrang 14 aufliegt, kann der Zwischenraum zwischen dem Dünnglas 11 und dem Außenglas 12 in an sich bekannter Weise mit einem von Luft verschiedenen Gas gefüllt werden, um die Isolationswirkung zu erhöhen. Das Dünnglas 11 und das Außenglas 12 sind dann zu einer Glasbaugruppe 16 zusammengefügt. Das Außenglas 13 mit dem applizierten Abstandhalterstrang 15 wird in die Zwischenstation 32 transportiert, vgl. Zwischenschritt D in Figur 1.

Der Abstand zwischen den Pressplatten 51 und 52 wird wieder vergrößert und die Glasbaugruppe 16 wird über die Zwischenstation 33 in die Drehstation 6 gefördert. Gleichzeitig wird das Außenglas 13 durch die Pressstation 5 hindurch zur Zwischenstation 33 gefördert, vgl. Zwischenschritt E in Figur 2.

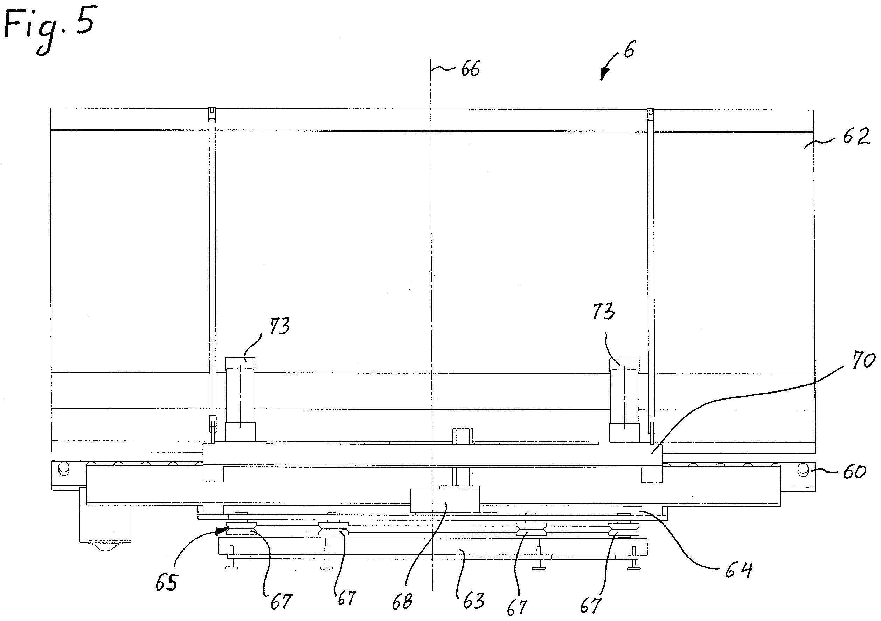

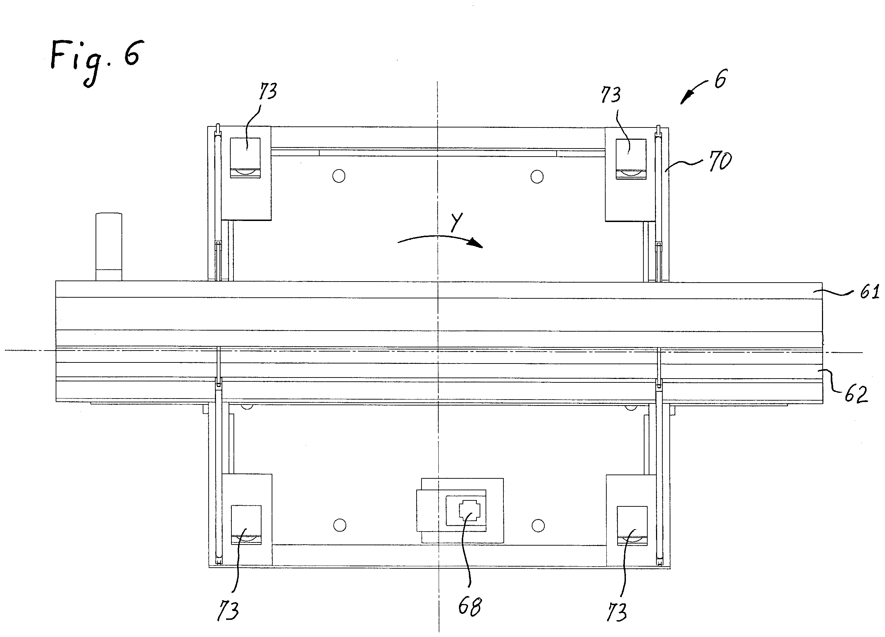

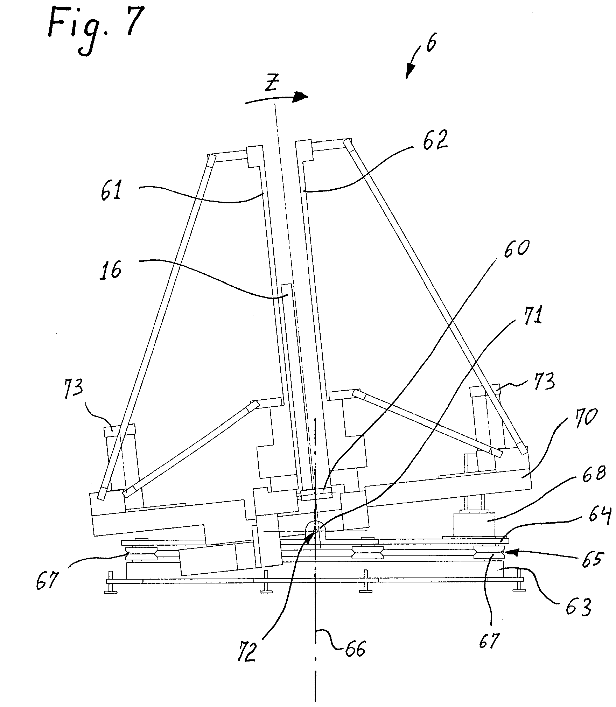

Die Drehstation 6 hat einen einspurigen Waagerechtförderer 60, eine erste Stützwand 61 und eine zweite Stützwand 62, vgl. Figuren 5 bis 7. Der Waagerechtförderer 60 ist in an sich bekannter Weise ausgebildet. Ferner hat die Drehstation 6 ein ortsfest auf dem Fußboden stehendes Untergestell 63, an welchem ein Drehrahmen 64 angebracht ist. Zwischen dem Drehrahmen 64 und dem Untergestell 63 ist ein Drehgelenk 65 mit einer vertikal stehenden Drehachse 66 angeordnet. Das Drehgelenk 65 ist als Drehkranz mit mehreren entlang des Umfangs angeordneten Führungsrollen 67 ausgebildet. Die Drehstation 6 enthält einen Drehantrieb 68, mit welchen der Drehrahmen 64 in Richtung des Pfeiles Y um die Drehachse 66 gedreht werden kann. An dem Drehrahmen 6 ist ein Kipprahmen 70 angebracht. Zwischen dem Drehrahmen 64 und dem Kipprahmen 70 ist ein Kippgelenk 71 mit einer horizontalen Kippachse 72 angeordnet. Die Kippachse 72 verläuft in Figur 7 senkrecht zur Zeichenebene. Kippantriebe 73 in Form von Druckmittelzylindern sind vorgesehen, um den Kipprahmen 70 relativ zum Drehrahmen 64 in Richtung des Pfeiles Z um die Kippachse 72 zu kippen.

Wenn die Glasbaugruppe 16 stehend von der Pressstation 5 in die Drehstation 6 gefördert wird, stützt sich die Glasbaugruppe 16 an der Außenseite 122 der Glastafel 12 ab. Die Waagerechtförderer 50 und 60 stehen in einer Linie und die Stützwand 61 steht in einer Ebene mit der Pressplatte 51, wenn die Glasbaugruppe 16 in die Drehstation 6 hineingefördert wird. Anschließend wird die Glasbaugruppe 16 über den Drehantrieb 68 in Richtung des Pfeiles Y um 180° gedreht. Gleichzeitig mit der Drehbewegung in Richtung des Pfeiles Y wird die die Glasbaugruppe 16 über die Kippantriebe 73 in Richtung des Pfeiles Z gekippt. Beim Kippen des Waagerechtförderers 60 zusammen mit den Stützwänden 61 und 62 kippt auch die Glasbaugruppe 16 von der Stützwand 61 weg und hin zu der Stützwand 62. Nach Beendigung des Kippvorgangs stützt sich die Glasbaugruppe 16 mit dem Dünnglas 11 an der Stützwand 62 ab. Nach Beendigung des Dreh- und Kippvorgangs fluchtet der Waagerechtförderer 60 wieder mit dem Waagerechtförderer 50 und die Stützwand 62 steht in einer Ebene mit der Pressplatte 51, vgl. Zwischenschritt F in Figur 2.

Nach dem Drehen der Glasbaugruppe 16 werden die Glasbaugruppe 16 und das Außenglas 13 weitertransportiert. Die stehende Glasbaugruppe 16 wird an dem Dünnglas 11 abgestützt und in die zweite Pressstation 8 gefördert. Das Außenglas 13 wird ohne Drehung stehend durch die Drehstation 6 hindurchgefördert und wird dabei an der Außenseite 132 von der Stützwand 62 abgestützt, vgl. Zwischenschritt G in Figur 2.

Die Pressstation 8 hat einen einspurigen Waagerechtförderer 80, eine erste Pressplatte 81 und eine zweite Pressplatte 82. Die erste Pressplatte 81 ist ortsfest angeordnet und gegenüber der Vertikalen leicht nach hinten geneigt. Die Pressplatte 81 stützt die auf dem Waagerechtförderer 80 stehende Glasbaugruppe 16 ab, sodass diese nicht nach vorne, d. h. zu der der Pressplatte 81 abgewandten Seite, umkippt. Die Pressplatte 81 bildet eine Luftkissenstützwand mit einer ebenen Stützfläche, welche in einer Ebene mit der Stützfläche 54 der Pressplatte 51 angeordnet ist. Die zweite Pressplatte 82 ist parallel zu der Pressplatte 81 angeordnet und kann quer zur Förderrichtung des Waagerechtförderer 80 linear verschoben werden, sodass sich der Abstand zwischen den beiden Pressplatten 81 und 82 verändert. Die Pressplatte 82 enthält eine an sich bekannte Ansaugeinrichtung (nicht dargestellt), mit welcher eine sich an der Pressplatte 81 abstützende Glasbaugruppe 16 angesaugt werden kann. Die Glasbaugruppe 16 wird am Außenglas 12 an die Pressplatte 82 angesaugt. Die Pressplatte 82 wird anschließend mit der daran angesaugten Glasbaugruppe 16 von der Pressplatte 81 wegbewegt. Dadurch wird der Waagerechtförderer 80 frei und kann das Außenglas 13 in die Pressstation 8 hineinfördern. Wenn das Außenglas 13 deckungsgleich zu dem Außenglas 12 steht, wird die Pressplatte 82 mit der daran angesaugten Glasbaugruppe 16 wieder in Richtung zur Pressplatte 81 bewegt. Der Abstand zwischen den beiden Pressplatten 81 und 82 wird soweit verringert, bis das Dünnglas 11 auf dem Abstandhalterstrang 15 aufliegt und das erste Außenglas 12 einen vordefinierten Abstand zu dem zweiten Außenglas 13 aufweist, vgl. Zwischenschritt H in Figur 2. Bevor das Dünnglas 11 vollständig auf dem Abstandhalterstrang 15 aufliegt, kann der Zwischenraum zwischen dem Dünnglas 11 und dem Außenglas 13 in an sich bekannter Weise mit einem von Luft verschiedenen Gas gefüllt werden.

Das Ansaugen des Außenglases 12 an die Pressplatte 82 wird beendet und der Abstand zwischen den Pressplatten 81 und 82 wird wieder vergrößert. Dann wird die zusammengebaute Dreifach-Isolierglasscheibe 10 über den Waagerechtförderer 80 und die Zwischenstation 35 abtransportiert. Dabei wird die stehende Isolierglasscheibe 10 an der Außenseite 132 abgestützt.

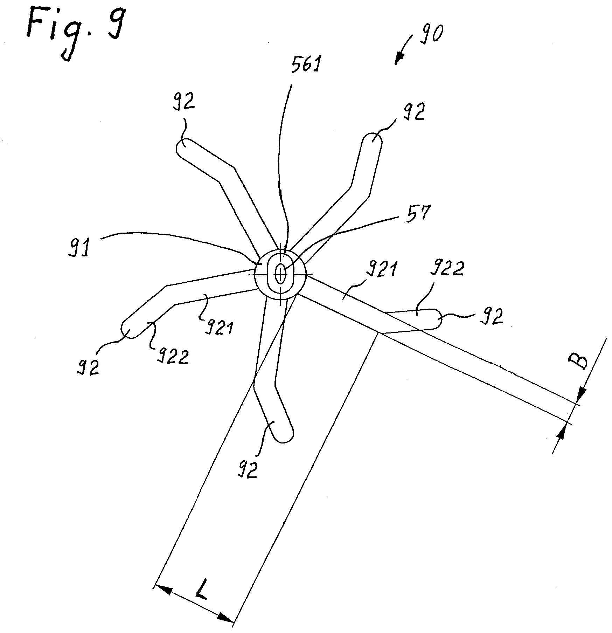

Die Luftkanäle 57 in der Pressplatte 51 sind wahlweise mit Unterdruck oder mit Überdruck beaufschlagbar. Bei Beaufschlagung mit Unterdruck bilden sie Ansaugeinrichtungen 90, um das flexible Dünnglas 11 möglichst eben an die Stützfläche 53 anzusaugen. Eine Ansaugeinrichtung 90 umfasst einen Luftkanal 57, eine kreisförmige Vertiefung 91 sowie mehrere Nuten 92, vgl. Figur 9. Die Vertiefung 91 umgibt den Endkanalabschnitt 572 und steht mit diesem in Verbindung. Die Vertiefung 91 ist zur Stützfläche 54 hin offen und weist einen Durchmesser von 20 mm oder weniger auf. Die Nuten 92 laufen radial auf den Endkanalabschnitt 572 zu und münden in die Vertiefung 91. Eine Nut 92 kann mehrere Nutabschnitte 921 und 922 enthalten. Die beiden Nutabschnitte 921 und 922 verlaufen schräg zueinander. Die Länge L eines geradlinig verlaufenden Nutabschnitts 921, 922 beträgt höchstens 60 mm. Die Breite B der Nut 92 beträgt etwa 8 mm. Die Tiefe T der Vertiefung 91 und der Nut 92 beträgt höchstens 1 mm. Die Vertiefung 91 kann geringfügig tiefer als die Nut 92 sein. Die Stützfläche 54 hat einen ersten Stützbereich 93, in welchem die Luftkanaldichte größer als in einem zweiten Stützbereich 94 ist. Der Luftkissentransport von Dünnglas 11 wird dadurch verbessert. Im ersten Stützbereich 93 ist der von den Luftkanälen 57 von den Luftkanälen 57 mit Unterdruck beaufschlagter Flächenanteil größer als in dem zweiten Stützbereich 94. Eine Ansaugeinrichtung 90 enthält im Stützbereich 93 vier Nuten 92 und im Stützbereich 94 fünf Nuten 92. Im Bereich einer unteren Ecke der Stützwand 53 ist ein dritter Stützbereich 95 angeordnet, in welchem der besaugte Flächenanteil noch größer als in dem Stützbereich 93 ist. Dies wird dadurch erreicht, dass einige Nuten 92 mit mehreren Luftkanälen 57 in Verbindung stehen und sich kreuzen. Die Stützwand 53 hat Löcher 96 zur Aufnahme von Sensoren. Die Ansaugeinrichtungen 90 sparen den Bereich der Löcher 96 aus.

Mit den erfindungsgemäßen Ansaugeinrichtungen 90 wird das Dünnglas 11 in der ersten Pressstation 5 zunächst an die erste Pressplatte 51 angesaugt. Die Gestaltung der Ansaugeinrichtungen 90 kann gewährleisten, dass das Dünnglas 11 besonders eben und ohne Wellen zu bilden an der Stützfläche 54 anliegt. Durch die unterschiedliche starke Ansaugwirkung in den Stützbereichen 93, 94 und 95, legt sich das Dünnglas zuerst im Stützbereich 95 an die Stützfläche 54 an. Von dieser Ecke ausgehend legt sich das Dünnglas 11 anschließend in den Stützbereichen 93 und 94 an die Stützfläche 54 an. Dieser von einer Ecke des Dünnglases 11 ausgehende Anlegevorgang führt zu einer vollflächigen und besonders ebenen Anlage des Dünnglases 11 an der Stützfläche 54. Es wird eine Bildung von Luftpolstern zwischen der Stützfläche 54 und dem Dünnglas 11 vermieden, welche zu einer Welligkeit des Dünnglases 11 führen würde. Die Ansaugung des Dünnglases 11 an die erste Pressplatte 51 wird aufrechterhalten, während das Dünnglas 11 an die zweite Pressplatte 52 angesaugt wird. Erst wenn das Dünnglas 11 an die zweite Pressplatte 52 angesaugt ist, wird das Ansaugen an die erste Pressplatte 51 beendet. Dadurch kann das Dünnglas 11 in sehr ebener Weise an die zweite Pressplatte 52 übergeben und auf den Abstandhalter 14 aufgesetzt werden, wie vorstehend bereits beschrieben ist. Die Ansaugeinrichtung in der zweiten Pressplatte 52 kann in an sich bekannter Weise ausgestaltet sein oder erfindungsgemäße Ansaugeinrichtungen 90 enthalten.

**Bezugszeichenliste**

| | | | |
|---|---|---|---|
| 1 | Vorrichtung | 55 | Vertikale |
| 10 | Isolierglasscheibe | 56 | Gummibelag |
| 11 | Dünnglastafel | 561 | ovales Loch |
| 111 | Unterkante | 57 | Luftkanäle |
| 12 | Außenglastafel | 571 | Kanalabschnitt |
| 121 | Oberfläche/Innenseite | 572 | Endkanalabschnitt |
| 122 | Oberfläche/Außenseite | 6 | Drehstation |
| 13 | Außenglastafel | 61 | Stützwand |
| 131 | Oberfläche/Innenseite | 62 | Stützwand |
| 132 | Oberfläche/Außenseite | 63 | Untergestell |
| 14 | Abstandhalterstrang | 64 | Drehrahmen |
| 15 | Abstandhalterstrang | 65 | Drehgelenk |
| 16 | Glasbaugruppe | 66 | Drehachse |
| 2 | Visitierstation | 67 | Führungsrollen |
| 20 | Waagerechtförderer | 68 | Drehantrieb |
| 21 | Gestell | 70 | Kipprahmen |
| 22 | Transportrollen | 71 | Kippgelenk |
| 23 | Stützbalken | 72 | Kippachse |
| 24 | Stützbalken | 73 | Kippantriebe |
| 25 | Stützbalken | 8 | Pressstation |
| 31 | Zwischenstation | 80 | Waagerechtförderer |
| 32 | Zwischenstation | 81 | Pressplatte |
| 33 | Zwischenstation | 82 | Pressplatte |
| 34 | Zwischenstation | 90 | Ansaugeinrichtung |
| 35 | Zwischenstation | 91 | Vertiefung |
| 4 | Auftragestation | 92 | Nut |
| 5 | Pressstation | 921 | Nutabschnitt |
| 50 | Waagerechtförderer | 922 | Nutabschnitt |
| 51 | Pressplatte | 93 | Stützbereich |
| 52 | Pressplatte | 94 | Stützbereich |
| 53 | Stützwand | 95 | Stützbereich |
| 54 | Stützfläche | 96 | Löcher |

## Patentansprüche

1. Verfahren zum Zusammenbauen einer zwei Außengläser (12, 13) und ein dazwischen liegendes Dünnglas (11) enthaltenden Dreifach-Isolierglasscheibe (10) mit folgenden Schritten:
• ein stehendes Dünnglas (11) wird durch eine Auftragestation (4) hindurch in eine erste Pressstation (5) gefördert;
• ein erstes Außenglas (12) wird stehend in die Auftragestation (4) hineingefördert;
• in der Auftragestation (4) wird ein erster flexibler Abstandhalterstrang (14) auf das erste Außenglas (12) aufgetragen, sodass der erste Abstandhalterstrang (14) einen rahmenförmigen Abstandhalter auf dem ersten Außenglas (12) bildet;
• nach dem Auftragen des Abstandhalterstrangs (14) wird das erste Außenglas (12) stehend aus der Auftragestation (4) in die erste Pressstation (5) gefördert;
• ein zweites Außenglas (13) wird stehend in die Auftragestation (4) hineingefördert;
• in der Auftragestation (4) wird ein zweiter flexibler Abstandhalterstrang (15) auf das zweite Außenglas (13) aufgetragen, sodass der zweite Abstandhalterstrang (15) einen rahmenförmigen Abstandhalter auf dem zweiten Außenglas (13) bildet;
• in der ersten Pressstation (5) wird das Dünnglas (11) und das erste Außenglas (12) zu einer Glasbaugruppe (16) zusammengefügt, indem der Abstand des Dünnglases (11) zu dem ersten Außenglas (12) verringert wird, bis das Dünnglas (11) auf dem ersten Abstandhalterstrang (14) aufliegt und einen vordefinierten Abstand zu dem ersten Außenglas (12) aufweist;
• die Glasbaugruppe (16) wird stehend aus der ersten Pressstation (5) in eine Drehstation (6) gefördert und dort um eine aufrecht stehende Drehachse (66) gedreht;
• nach dem Drehen wird die Glasbaugruppe (16) stehend aus der Drehstation (6) in eine zweite Pressstation (8) gefördert;
• das zweite Außenglas (13) wird stehend aus der Auftragestation (4) durch die erste Pressstation (5) und die Drehstation (6) hindurch in die zweite Pressstation (8) gefördert;
• in der zweiten Pressstation (8) wird die Glasbaugruppe (16) und das zweite Außenglas (13) zu einer Dreifach-Isolierglasscheibe (10) zusammengefügt, indem der Abstand der Glasbaugruppe (16) zu dem zweiten Außenglas (13) verringert wird, bis das Dünnglas (11) auf dem zweiten Abstandhalterstrang (15) aufliegt und das erste Außenglas (12) einen vordefinierten Abstand zu dem zweiten Außenglas (13) aufweist;
• nach dem Zusammenfügen wird die Dreifach-Isolierglasscheibe (10) stehend aus der zweiten Pressstation (8) herausgefördert.

2. Verfahren nach Anspruch 1, welches folgende Schritte enthält:
• in der ersten Pressstation (5) wird das sich an einer ersten Pressplatte (51) abstützende Dünnglas (11) an eine zweite Pressplatte (52) angesaugt;
• die zweite Pressplatte (52) mit dem daran angesaugten Dünnglas (11) wird von der ersten Pressplatte (51) wegbewegt;
• das erste Außenglas (12) wird in die erste Pressstation (5) hineingefördert, wobei es sich an der ersten Pressplatte (51) abstützt;
• nach dem Zusammenfügen des Dünnglases (11) mit dem ersten Außenglas (12) wird das Ansaugen des Dünnglases (11) an die zweite Pressplatte (52) beendet.

3. Verfahren nach Anspruch 2, welches folgende Schritte enthält:
• in der ersten Pressstation (5) wird das sich an der ersten Pressplatte (51) abstützende Dünnglas (11) zunächst an die erste Pressplatte (51) angesaugt;
• das Dünnglas (11) wird an die zweite Pressplatte (52) angesaugt, bevor das Ansaugen des Dünnglases (11) an die erste Pressplatte (51) beendet wird.

4. Verfahren nach einem der vorstehenden Ansprüche, welches folgende Schritte enthält:
• in der zweiten Pressstation (8) wird das Außenglas (12) der sich an der ersten Pressplatte (81) abstützenden Glasbaugruppe (16) an die zweite Pressplatte (82) angesaugt;
• die zweite Pressplatte (82) mit der daran angesaugten Glasbaugruppe (16) wird von der ersten Pressplatte (81) wegbewegt;
• das zweite Außenglas (13) wird in die zweite Pressstation (8) hineingefördert, wobei es sich an der ersten Pressplatte (81) abstützt;
• nach dem Zusammenfügen der Glasbaugruppe (16) mit dem zweiten Außenglas (13) wird das Ansaugen des ersten Außenglases (12) an die zweite Pressplatte (82) beendet.

5. Vorrichtung (1) zum Zusammenbauen einer zwei Außengläser (12, 13) und ein dazwischen liegendes Dünnglas (11) enthaltenden Dreifach-Isolierglasscheibe (10), aufweisend:
• eine Auftragestation (5), welche zum Auftragen eines flexiblen Abstandhalterstrangs (14; 15) entlang eines Randes eines stehenden Außenglases (12; 13) eingerichtet ist;
• eine nachfolgend der Auftragestation (4) angeordnete erste Pressstation (5) mit einem Waagerechtförderer (50) und zwei parallelen Pressplatten (51, 52), deren Abstand zueinander unter Beibehaltung ihrer Parallelität veränderbar ist und von denen eine erste Pressplatte (51) eine aufrechte Stützwand (53) für eine stehend auf dem Waagerechtförderer (50) transportierte Glastafel (11; 12; 13) bildet;
• eine nachfolgend der ersten Pressstation (5) angeordnete Drehstation (6) mit zwei parallelen Stützwänden (61, 62) und einem Waagerechtförderer (60), welcher beiden Stützwänden (61, 62) zugeordnet und mit den Stützwänden (61, 62) gemeinsam um eine aufrecht stehende Drehachse (66) drehbar ist, welche entlang der Förderrichtung gesehen mittig in Bezug auf den Waagerechtförderer (60) angeordnet ist;
• eine nachfolgend der Drehstation (6) angeordnete zweite Pressstation (8) mit einem Waagerechtförderer (80) und zwei parallelen Pressplatten (81, 82), deren Abstand zueinander unter Beibehaltung ihrer Parallelität veränderbar ist und von denen eine erste Pressplatte (81) eine aufrechte Stützwand (53) für eine stehend auf dem Waagerechtförderer (80) transportierte Glastafel (13) bildet.

6. Vorrichtung nach Anspruch 5, welche eine Visitierstation (2) mit einem Waagerechtförderer (20) und mehreren, insbesondere drei, Stützbalken (23, 24, 25) zum Abstützen einer auf dem Waagerechtförderer (20) stehenden Glastafel (11; 12; 13) enthält, wobei sich die Stützbalken (23, 24, 25) horizontal erstrecken und äquidistant zueinander nach oben und unten verschiebbar sind.

7. Vorrichtung nach Anspruch 5 oder 6, in welcher die Drehstation (6) folgende Merkmale aufweist:
• ein ortsfest auf dem Fußboden stehendes Untergestell (63), an welchem ein Drehrahmen (64) angebracht ist;
• der Drehrahmen (64) ist über ein Drehgelenk (65) relativ zu dem Untergestell (63) um eine vertikale Drehachse (66) drehbar;
• an dem Drehrahmen (64) ist ein Kipprahmen (70) angebracht, welcher über ein Kippgelenk (71) um eine horizontale Kippachse (72) relativ zu dem Drehrahmen (64) kippbar ist;
• die Stützwände (61, 62) und der Waagerechtförderer (60) sind an dem Kipprahmen (70) befestigt.

8. Vorrichtung nach einem der Ansprüche 5 bis 7, in welcher zumindest eine der Stationen (2, 31, 32, 33, 34, 35, 4, 5, 6, 8), insbesondere die erste Pressstation (5), eine Luftkissenstützwand (53) mit einer ebenen Stützfläche (54) aufweist, wobei eine Vielzahl von Luftkanälen (57) in die Stützfläche (54) mündet, aus welchen bei Beaufschlagung mit Überdruck ein Luftstrom schräg zur Stützfläche (54) austritt.

9. Vorrichtung nach Anspruch 8, in welcher die Stützfläche (54) einen ersten Stützbereich (93) und einen zweiten Stützbereich (94) aufweist, wobei eine Luftkanaldichte in dem ersten Stützbereich (93) größer als in dem zweiten Stützbereich (94) ist, und wobei die Luftkanaldichte als Anzahl von Luftkanälen (57) pro Quadratmeter Stützfläche (54) definiert ist.

10. Vorrichtung nach einem der Ansprüche 5 bis 9, in welcher zumindest eine der Pressplatten (51, 52, 81, 82), insbesondere die erste Pressplatte (51) der ersten Pressstation (5), eine ebene Stützfläche (54) aufweist, in welche eine Vielzahl von Luftkanälen (57) mündet, wobei die Luftkanäle (57) bei Beaufschlagung mit Unterdruck Ansaugeinrichtungen (90) bilden, um ein Dünnglas (11) eben an die Stützfläche (54) anzusaugen.

11. Vorrichtung nach Anspruch 10, in welcher die Stützfläche (54) der Pressplatte (51) zumindest eine Vertiefung (91) aufweist, welche mit einem Endkanalabschnitt (572) des Luftkanals (57) in Verbindung steht.

12. Vorrichtung nach Anspruch 10 oder 11, in welcher die Stützfläche der Pressplatte (51) zumindest eine Nut (92) aufweist, welche mit einem Endkanalabschnitt (572) des Luftkanals (57), insbesondere mit einer den Endkanalabschnitt (572) umgebenden Vertiefung (91), in Verbindung steht.

13. Vorrichtung nach Anspruch 12, in welcher die Nut (92) wenigstens zwei schräg zueinander verlaufende Nutabschnitte (921, 922) enthält.

14. Vorrichtung nach einem der Ansprüche 10 bis 13, in welcher die Stützfläche (54) einen ersten Stützbereich (93) und einen zweiten Stützbereich (94) aufweist, wobei ein besaugter Flächenanteil in dem ersten Stützbereich (93) größer als in dem zweiten Stützbereich (94) ist, und wobei der besaugte Flächenanteil als Quotient aus der von den Luftkanälen (57) mit Unterdruck beaufschlagten Fläche und der Gesamtfläche des jeweiligen Stützbereichs (93; 94) definiert ist.

15. Vorrichtung nach einem der Ansprüche 10 bis 14, in welcher die Luftkanäle (57) in der Pressplatte (51) wahlweise mit Unterdruck oder mit Überdruck beaufschlagbar sind.
